(19) Europäisches Patentamt
European Patent Office
Office européen des brevets

(11) **EP 4 093 985 B1**

(12) **FASCICULE DE BREVET EUROPEEN**

(45) Date de publication et mention de la délivrance du brevet:
**10.05.2023 Bulletin 2023/19**

(21) Numéro de dépôt: **21702414.0**

(22) Date de dépôt: **25.01.2021**

(51) Classification Internationale des Brevets (IPC):
*F16C 33/58* (2006.01)   *F16C 33/41* (2006.01)
*F16C 33/60* (2006.01)   *F16C 33/64* (2006.01)
*F16C 41/04* (2006.01)   *F16C 19/18* (2006.01)
*F16C 19/50* (2006.01)

(52) Classification Coopérative des Brevets (CPC):
**F16C 33/583; F16C 19/185; F16C 19/186;
F16C 19/505; F16C 33/414; F16C 33/585;
F16C 33/60; F16C 33/64; F16C 41/04;**
F16C 2226/12; F16C 2240/80; F16C 2326/02

(86) Numéro de dépôt international:
**PCT/EP2021/051628**

(87) Numéro de publication internationale:
**WO 2021/148676 (29.07.2021 Gazette 2021/30)**

(54) **ENSEMBLE ROTATIF, NOTAMMENT POUR UN GUIDAGE DE ROUE DE VÉHICULE AUTOMOBILE**

DREHANORDNUNG, INSBESONDERE ZUR FÜHRUNG EINES KRAFTFAHRZEUGRADES

ROTATING ASSEMBLY, IN PARTICULAR FOR GUIDING A MOTOR VEHICLE WHEEL

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **24.01.2020 FR 2000720
23.07.2020 FR 2007750**

(43) Date de publication de la demande:
**30.11.2022 Bulletin 2022/48**

(73) Titulaire: **NTN-SNR ROULEMENTS
74000 Annecy (FR)**

(72) Inventeurs:
• **BAUDU, Alexandre
  74000 Annecy (FR)**
• **POURROY-SOLARI, Vincent
  74230 THONES (FR)**
• **RUHLAND, Siegfried
  74010 Annecy cedex (FR)**

(74) Mandataire: **Alatis
3 rue Paul Escudier
75009 Paris (FR)**

(56) Documents cités:
**FR-A1- 3 052 104       JP-A- 2010 159 011
JP-A- 2013 018 478**

**Description**

## DOMAINE TECHNIQUE DE L'INVENTION

L'invention se rapporte à un ensemble rotatif, et notamment à un ensemble rotatif adapté au guidage d'une roue, notamment d'une roue motrice, d'un véhicule automobile.

## ÉTAT DE LA TECHNIQUE ANTÉRIEURE

Un assemblage de roue motrice de véhicule automobile, une fois monté sur le véhicule, comporte généralement un sous-ensemble fixe destiné à être solidarisé à un élément de suspension du véhicule et comportant un premier chemin de roulement extérieur et un deuxième chemin de roulement extérieur définissant un axe de révolution; un sous-ensemble tournant, apte à tourner par rapport à l'organe fixe autour de l'axe de révolution, et comportant un moyeu de roue, un bol de transmission, un premier chemin de roulement intérieur situé en regard du premier chemin de roulement extérieur, un deuxième chemin de roulement intérieur situé en regard du deuxième chemin de roulement extérieur; et des billes, formant une première rangée de billes entre le premier chemin de roulement extérieur et le premier chemin de roulement intérieur et une deuxième rangée de billes entre le deuxième chemin de roulement extérieur et le deuxième chemin de roulement intérieur. Le moyeu de roue présente une interface de fixation pour une jante de roue et un disque de frein. L'assemblage présente donc classiquement un empilage de fonctions techniques, disposées suivant l'axe de révolution depuis l'intérieur vers l'extérieur du véhicule : transmission du couple, solidarisation à la suspension du véhicule, guidage en rotation, freinage et roulage, ce qui nécessite un encombrement important en sens axial, c'est-à-dire transversal dans le référentiel du véhicule.

Il a été proposé dans le document FR 3 052 104 de fretter sur le bol de transmission une bague intérieure de roulement pour le deuxième chemin de roulement intérieur, ce qui permet de diminuer l'encombrement axial pour une distance donnée entre les deux rangées de billes, tout en augmentant le diamètre primitif de la rangée de billes située du côté intérieur du véhicule. Dans la mesure où la charge utile et la raideur en carrossage sont des fonctions croissantes de la distance entre les deux rangées de billes et du diamètre primitif des rangées de billes, cette architecture apporte une solution pour concilier un encombrement axial réduit et de bonnes performances en termes de charge utile et de raideur en carrossage.

Les groupes motopropulseurs électriques et hybrides des véhicules s'avèrent souvent plus encombrants que les groupes motopropulseurs thermiques dans le sens de la largeur du véhicule au niveau des roues motrices, ce qui conduit à un raccourcissement des arbres de transmission transversaux. Ce raccourcissement n'est pas souhaitable car il conduit à des angles de débattement plus importants dans les joints de transmissions lors des mouvements de la roue par rapport au châssis. Dans ce contexte, toute mesure permettant d'augmenter, même faiblement, l'espace disponible pour les arbres de transmission transversaux, est souhaitable. Il existe donc un besoin accru de compacité des assemblages de roue motrice en sens axial, qui ne se fasse pas au détriment des performances, notamment au niveau de la charge utile et de la rigidité.

## EXPOSÉ DE L'INVENTION

L'invention vise à proposer un ensemble rotatif, par exemple pour le guidage d'une roue motrice de véhicule automobile, qui allie compacité axiale, charge utile élevée et bon niveau de raideur en carrossage.

Pour ce faire est proposé, selon un premier aspect de l'invention, un ensemble rotatif, comportant :

- un sous-ensemble extérieur comportant un premier chemin de roulement extérieur annulaire et un deuxième chemin de roulement extérieur annulaire centrés sur un axe de révolution commun ;

- un sous-ensemble intérieur comportant une première bague intérieure de roulement sur laquelle est formé un premier chemin de roulement intérieur, le premier chemin de roulement intérieur ayant un diamètre de fond de chemin DI1, et une deuxième bague intérieure de roulement sur laquelle est formée un deuxième chemin de roulement intérieur, le deuxième chemin de roulement intérieur ayant un diamètre de fond de chemin DI2 plus grand que le diamètre de fond de chemin DI1 du premier chemin de roulement intérieur , la deuxième bague intérieure de roulement et la première bague intérieure de roulement étant fixes l'une par rapport à l'autre ; et

- des billes formant une première rangée de billes aptes à rouler sur le premier chemin de roulement extérieur et le premier chemin de roulement intérieur et une deuxième rangée de billes aptes à rouler sur le deuxième chemin de roulement extérieur et le deuxième chemin de roulement intérieur pour guider le sous-ensemble extérieur et le sous-ensemble intérieur l'un par rapport à l'autre en rotation autour de l'axe de révolution, les billes de la première rangée de billes ayant un diamètre DC1, un premier plan primitif contenant les centres des billes de la première rangée de billes étant situé à une distance L non nulle d'un deuxième plan primitif contenant les centres des billes de la deuxième rangée de billes ;

Selon l'invention, la deuxième bague intérieure de roulement présente un diamètre extérieur (Φ), mesuré dans un plan de coupe perpendiculaire à l'axe de révolution et situé entre le premier plan primitif et le deuxième plan primitif, à une distance de mesure DM du premier plan primitif, qui est supérieur à une valeur donnée seuil VS, où :

$$\begin{cases} DM = 1{,}25 \times \dfrac{DC1}{2} \\ VS = \sup\left(1{,}1 \times DI1; DI1 + \dfrac{DC1}{2}\right) \end{cases}$$

Ces caractéristiques dimensionnelles traduisent le fait que la deuxième bague intérieure de roulement portant le deuxième chemin de roulement intérieur est proche du premier chemin de roulement, et présente, à proximité du premier chemin de roulement, une épaisseur importante, conférant au sous-ensemble intérieur une raideur élevée, et à l'ensemble tournant une compacité axiale satisfaisante.

De préférence la deuxième bague intérieure de roulement comporte une face d'extrémité axiale tournée axialement vers le premier plan primitif, en appui axial contre une face d'appui de la première bague intérieure de roulement, la face d'extrémité axiale étant positionnée dans un plan transversal situé entre le premier plan primitif et le deuxième plan primitif, à une distance D du premier plan primitif de préférence inférieure à la moitié du diamètre DC1 des billes de la première rangée de billes. De préférence, la face d'extrémité axiale est plane. Elle présente un diamètre extérieur qui est de préférence égal ou sensiblement égal à celui de la face d'appui. Le diamètre extérieur de la face d'extrémité axiale est de préférence supérieur ou égal au diamètre de fond de chemin DI1. En pratique, il est inférieur à la valeur seuil VS. En coupe dans un plan contenant l'axe de révolution, la surface extérieure de la deuxième bague intérieure de roulement, dans la portion située entre la face d'extrémité axiale et le plan de coupe PC, est concave et la distance d'un point courant de cette surface extérieure de la deuxième bague intérieure de roulement à l'axe de révolution croît continûment lorsque le point courant s'éloigne de la face d'extrémité axiale et se rapproche du plan de coupe PC.

Pour une bonne maîtrise du positionnement des billes de la première rangée de billes durant le montage de l'assemblage ou en utilisation, on prévoit de préférence une première cage de roulement monobloc, la première cage de roulement monobloc comportant un anneau définissant un axe de référence de la première cage de roulement et des griffes de retenue distribuées à la périphérie de l'anneau pour délimiter des alvéoles de logement des billes de la première rangée de billes.

La deuxième bague intérieure de roulement occupe un volume à proximité immédiate du premier chemin de roulement, qui laisse peu de place pour loger une cage dont l'anneau serait situé entre le premier plan primitif et le deuxième plan primitif. De préférence, l'anneau est donc positionné d'un côté du premier plan primitif opposé au deuxième plan primitif, les griffes de retenue faisant saillie depuis l'anneau en direction du deuxième plan primitif en traversant le premier plan primitif, les griffes de retenue présentant une extrémité distale libre, les alvéoles étant délimitées chacune par deux griffes de retenue adjacentes parmi les griffes de retenue de la première cage monobloc et par une portion de l'anneau reliant les deux griffes de retenue adjacentes. La première cage est alors dépourvue d'anneau situé entre le premier plan primitif et le deuxième plan primitif à proximité de la deuxième bague intérieure de roulement. Davantage d'espace peut être alloué à la deuxième bague intérieure de roulement, pour augmenter son diamètre extérieur dans la zone entre la face d'extrémité axiale et le plan de coupe PC.

De préférence, les alvéoles sont enveloppantes, les griffes enserrant les billes pour éviter qu'elles ne s'échappent durant le montage. Suivant un mode de réalisation, les deux griffes de retenue adjacentes pour chacune des alvéoles comportent chacune une facette de guidage de retenue concave tournée vers la bille logée dans l'alvéole, les facettes de guidage de retenue se trouvant de préférence au moins partiellement à l'intérieur d'un premier cylindre primitif ayant pour base un premier cercle primitif passant par les centres des billes de la première rangée de billes et centré sur l'axe de révolution, les facettes de guidage de retenue se trouvant de préférence au moins partiellement entre le premier plan primitif et le deuxième plan primitif. De préférence, la portion d'anneau reliant les deux griffes de retenue adjacentes comporte une facette de guidage d'extrémité tournée vers la bille logée dans l'alvéole, la facette de guidage d'extrémité se trouvant de préférence au moins partiellement radialement à l'extérieur du premier cylindre primitif

Suivant une première variante, la première cage de roulement comporte en outre des griffes additionnelles distribuées à la périphérie de l'anneau, chacune des griffes additionnelles étant associée à l'une des griffes de retenue et présentant une extrémité distale libre située radialement à l'extérieur et en regard de la griffe de retenue associée. De préférence, les deux griffes additionnelles associées aux deux griffes de retenue adjacentes, pour chacune des alvéoles, comportent chacune une facette de guidage additionnelle concave tournée vers la bille logée dans l'alvéole, les facettes de guidage additionnelles se trouvant au moins partiellement à l'extérieur du premier cylindre primitif et au moins partiellement entre le premier plan primitif et le deuxième plan primitif.

Suivant une deuxième variante, on prévoit que pour chacune des alvéoles, les deux griffes de retenue adjacentes comportent chacune une facette de guidage additionnelle concave tournée vers la bille logée dans l'alvéole, les facettes de guidage additionnelles se trouvant au moins partiellement à l'extérieur du premier cylindre primitif et au moins partiellement entre le premier plan primitif et le deuxième plan primitif.

Il est avantageux de prévoir des moyens d'empilage des cages pour leur stockage avant le montage de l'assemblage de roue motrice sur une ligne d'assemblage. À cet effet, on peut prévoir que l'anneau de la première cage de roulement comporte en outre une face annulaire plane d'empilement tourné axialement à l'opposé des griffes de retenue, et une portée de centrage ayant une symétrie de révolution autour de l'axe de référence de la première cage de roulement, la première cage de roulement comportant en outre des facettes planes tournées axialement à l'opposé de la face annulaire d'empilement, en superposition avec la face annulaire plane d'empilement vu en projection orthogonale sur un plan d'empilement contenant la face annulaire plane d'empilement, et des facettes de centrage, tournées radialement à l'opposé de la portée de centrage, de manière telle que, vu en projection orthogonale sur le plan d'empilement, les facettes de centrage font face à la portée de centrage. Les cages peuvent ainsi être empilées en restant centrées, sans risque qu'elles s'accrochent les unes aux autres.

Pour une bonne maîtrise du positionnement des billes de la deuxième rangée de billes durant le montage de l'assemblage ou en utilisation, on prévoit de préférence une deuxième cage de roulement monobloc, comportant un anneau définissant un axe de référence de la deuxième cage de roulement et des griffes de retenue distribuées à la périphérie de l'anneau de la deuxième cage de roulement pour délimiter des alvéoles de logement des billes de la deuxième rangée de billes.

La deuxième bague intérieure de roulement et la bague extérieure de roulement occupent un volume entre le premier plan primitif et le deuxième plan primitif et à proximité immédiate du deuxième chemin de roulement, ce qui laisse peu de place pour loger une cage dont l'anneau serait situé entre le premier plan primitif et le deuxième plan primitif. De préférence, on prévoit donc que l'anneau de la deuxième cage de roulement soit positionné d'un côté du deuxième plan primitif opposé au premier plan primitif, les griffes de retenue de la deuxième cage de roulement faisant saillie depuis l'anneau de la deuxième cage de roulement en direction du premier plan primitif en traversant le deuxième plan primitif, les griffes de retenue de la deuxième cage de roulement présentant une extrémité distale libre, les alvéoles étant délimitées chacune par deux griffes de retenue adjacentes parmi les griffes de retenue de la deuxième cage de roulement et par une portion de l'anneau reliant les deux griffes de retenue adjacentes. La deuxième cage est alors dépourvue d'anneau situé entre le premier plan primitif et le deuxième plan primitif. Davantage d'espace peut être alloué à la deuxième bague intérieure de roulement, pour augmenter son diamètre extérieur, ainsi qu'à la bague extérieure de roulement pour diminuer son diamètre intérieur entre le premier plan primitif et le deuxième plan primitif.

Suivant un mode de réalisation particulièrement avantageux, les billes formant la première rangée de billes ont un diamètre de bille DC1 inférieur ou égal à un diamètre de billes DC2 des billes formant la deuxième rangée de billes. L'augmentation du diamètre des billes de la deuxième rangée permet de réduire la distance entre les deux rangées de billes, ce qui limite la flexion dans la deuxième bague intérieure de roulement, et donc les risques de décollement entre les pièces du sous-ensemble intérieur. Les chemins extérieurs de roulement sont de préférence enveloppants en direction axiale, au sens où ils présentent chacun un fond de chemin, situé dans une position axiale intermédiaire entre les extrémités axiales du chemin de roulement.

Suivant un mode de réalisation, la deuxième bague intérieure de roulement est frettée sur une portée de frettage de la première bague intérieure de roulement. Alternativement, la première bague intérieure de roulement et la deuxième bague intérieure de roulement peuvent être frettées sur une pièce commune, pleine ou creuse.

La deuxième bague intérieure de roulement est de préférence une pièce métallique massive, réalisée par exemple en acier. De même, la première bague intérieure de roulement est de préférence une pièce métallique massive, réalisée par exemple en acier.

L'ensemble rotatif tel que décrit ci-dessus est particulièrement adapté au guidage d'une roue de véhicule, en particulier une roue motrice. Suivant un mode de réalisation, le sous-ensemble extérieur constitue un sous-ensemble fixe d'un guidage de roue motrice de véhicule automobile, et le sous-ensemble intérieur constitue un sous-ensemble tournant du guidage de roue motrice de véhicule automobile, apte à tourner par rapport au sous-ensemble fixe autour de l'axe de révolution, le sous-ensemble tournant comportant un moyeu de roue comportant un flasque pourvu d'une interface de fixation d'une jante de roue ou d'un disque de frein, le flasque de fixation formant une face de montage de la jante de roue ou du disque de frein tournée axialement dans un sens de démontage de la jante de roue ou du disque de frein, le sens de démontage étant parallèle à l'axe de révolution, la première bague intérieure de roulement étant constituée par le moyeu de roue ou frettée sur le moyeu de roue, la deuxième bague intérieure de roulement étant frettée sur une portée de frettage du moyeu de roue.

Les premiers chemins de roulement et la première rangée de billes ont vocation, une fois l'assemblage intégré au véhicule, à être plus éloignés d'un plan vertical médian longitudinal du véhicule que les deuxièmes chemins de roulement et la deuxième rangée de billes.

Suivant un mode de réalisation, le sous-ensemble tournant comporte en outre un bol de transmission, la bague intérieure de roulement étant en appui contre le bol de transmission au niveau d'une interface de contact annulaire s'étendant au moins dans une direction radiale par rapport à l'axe de révolution. De préférence, l'interface de contact annulaire est positionnée au moins partiellement, et de préférence complètement, entre le premier plan primitif et le deuxième plan primitif, ce qui contribue à la une grande compacité de l'ensemble rotatif.

La deuxième bague intérieure de roulement présente une géométrie spécifique, qui permet de positionner le deuxième chemin de roulement intérieur radialement à l'extérieur du premier chemin de roulement intérieur, et de loger une partie du bol de transmission, incluant la face annulaire d'appui, dans un évidement formé par la bague intérieure de roulement.

De préférence, le moyeu de roue est une pièce métallique massive monobloc, ce qui concourt à une plus grande rigidité de l'assemblage. Alternativement, le moyeu peut être une pièce massive monobloc bi-matière, par exemple une combinaison acier/aluminium ou acier/matériau composite.

Le cas échéant, le sous-ensemble tournant comporte en outre un disque de frein en appui sur la face de montage, une jante de roue en appui sur le disque de frein et des éléments de fixation de la jante de roue et du disque de frein au flasque de fixation.

## BRÈVE DESCRIPTION DES FIGURES

D'autres caractéristiques et avantages de l'invention ressortiront à la lecture de la description qui suit, en référence aux figures annexées.

[Fig. 1] La figure 1 est une vue en coupe longitudinale d'un ensemble rotatif de guidage d'une roue motrice de véhicule automobile selon un premier mode de réalisation de l'invention.

[Fig. 2] La figure 2 est une vue isométrique d'une cage de roulement de l'ensemble rotatif de la figure 1.

[Fig. 3] La figure 3 illustre deux cages de roulement semblables à la cage de la figure 2, empilées l'une sur l'autre avant que l'une d'entre elles soit montée dans l'ensemble de la figure 1.

[Fig. 4] La figure 4 est une vue en coupe longitudinale d'un ensemble rotatif de guidage d'une roue motrice de véhicule automobile selon un deuxième mode de réalisation de l'invention.

[Fig. 5] La figure 5 est une vue isométrique d'une cage de roulement en variante de la cage de roulement de la figure 2, pour un ensemble rotatif selon la figure 1 ou selon la figure 4.

[Fig. 6] La figure 6 illustre deux cages de roulement semblables à la cage de la figure 5, empilées l'une sur l'autre avant que l'une d'entre elles soit montée dans l'ensemble de la figure 1 ou de la figure 4.

[Fig. 7] La figure 7 est une vue isométrique d'une cage de roulement en variante de la cage de roulement de la figure 2, pour un ensemble rotatif selon la figure 1 ou selon la figure 4.

[Fig. 8] La figure 8 illustre deux cages de roulement semblables à la cage de la figure 7, empilées l'une sur l'autre avant que l'une d'entre elles soit montée dans l'ensemble de la figure 1 ou de la figure 4.

[Fig. 9] La figure 9 est une vue isométrique d'une cage de roulement en variante de la cage de roulement de la figure 2, pour un ensemble rotatif selon la figure 1 ou selon la figure 4.

[Fig. 10] La figure 10 illustre deux cages de roulement semblables à la cage de la figure 9, empilées l'une sur l'autre avant que l'une d'entre elles soit montée dans l'ensemble de la figure 1 ou de la figure 4.

Pour plus de clarté, les éléments identiques ou similaires sont repérés par des signes de référence identiques sur l'ensemble des figures.

## DESCRIPTION DÉTAILLÉE DE MODES DE RÉALISATION

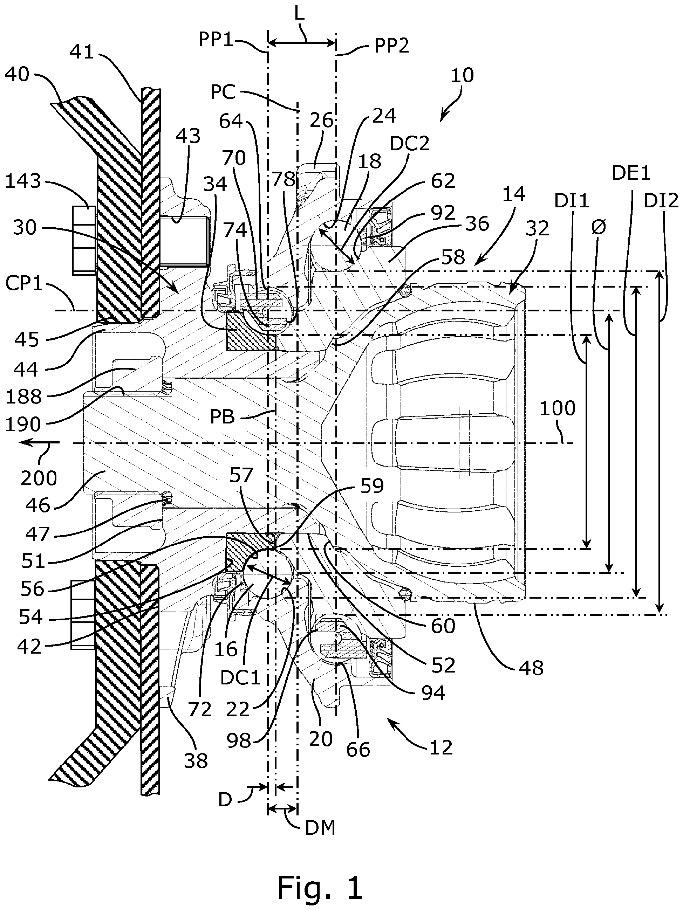

Sur la figure **1** est illustré un ensemble rotatif de guidage d'une roue motrice de véhicule automobile **10,** comportant un sous-ensemble extérieur fixe **12,** destiné à être solidarisé à un organe de suspension d'un véhicule automobile (non représenté) et définissant un axe de révolution **100,** un sous-ensemble intérieur tournant **14,** apte à tourner autour de l'axe de révolution **100** à l'intérieur du sous-ensemble extérieur fixe **12,** et des billes de guidage **16, 18** entre le sous-ensemble tournant **14** et le sous-ensemble fixe **12.**

Le sous-ensemble extérieur fixe **12** est ici constitué par une bague extérieure métallique massive monobloc **20** sur laquelle sont formés un premier chemin de roulement extérieur **22** et un deuxième chemin de roulement extérieur **24** coaxiaux définissant l'axe de révolution **100.** La bague extérieure comporte en outre au moins une bride de fixation **26** s'étendant radialement vers l'extérieur, dans laquelle sont formés des alésages (non illustrés sur cette figure) pour la fixation de la bride de fixation **26** à un organe de suspension, par l'intermédiaire d'éléments de fixation (non représentés).

Le sous-ensemble intérieur tournant **14** comporte un moyeu de roue **30,** un bol de transmission **32,** une première bague intérieure de roulement **34** facultative, et une deuxième bague intérieure de roulement **36.**

Le moyeu de roue **30** est une pièce métallique massive monobloc, qui comporte un flasque **38** de fixation d'une jante de roue motrice **40** et d'un disque de frein **41.** Le flasque **38** présente une face **42** d'appui du disque de frein **41,** et est pourvu d'alésages de fixation **43,** permettant l'insertion d'éléments de fixation **143** de la jante **40** et du disque de frein **41**.

Le moyeu de roue **30** présente en outre une jupe **44** de centrage qui fait saillie axialement par rapport à la face plane d'appui **42**, dans un sens de démontage **200** de la jante de roue **40** et du disque de frein **41**, et présente une portée de centrage **45**, de préférence étagée, tournée radialement vers l'extérieur, comportant une première portion cylindrique de centrage de la jante de roue **40** et une deuxième portion cylindrique, de diamètre égal ou plus important, pour le centrage du disque de frein **41** lors du montage. La portée de centrage **45** n'a pas nécessairement vocation à rester en contact avec la jante **40** et le disque de frein **41** après montage.

Le bol de transmission **32** est une pièce métallique massive monobloc, qui présente une portion saillante d'extrémité **46** et une portion médiane évasée **48** délimitant une cavité **50** de joint homocinétique. La portion saillante **46** du bol de transmission **32** est de préférence cannelée et montée libre, ajustée ou frettée dans une cavité tubulaire cannelée **47** du moyeu de roue **30**, formant une interface de contact cannelée. Par ailleurs, on a illustré avec sur la figure **1** des moyens de fixation du bol de transmission **32** et du moyeu de roue **30**, qui mettent en oeuvre par exemple un écrou **188** vissé à une extrémité filetée **190** de la portion saillante **46**, et en appui contre un épaulement **84** du moyeu de roue **30**.

La première bague intérieure de roulement **34** est frettée sur une portée de frettage cylindrique **52** du moyeu de roue **30**, en appui axial contre un épaulement annulaire **54** formé sur le moyeu de roue **30**. Un premier chemin de roulement intérieur **56** est formé sur la première bague intérieure de roulement **34** en regard du premier chemin de roulement extérieur **22**.

La deuxième bague intérieure de roulement **36** est également frettée sur la portée de frettage cylindrique **52** du moyeu de roue **30**, avec une face transversale d'extrémité **57** en appui axial contre une face transversale **59** de la première bague intérieure de roulement **34**. La deuxième bague intérieure de roulement **36** présente une face annulaire d'arrêt **58**, ici tronconique mais qui peut être plane, tournée axialement à l'opposé du premier chemin de roulement intérieur **56**, et axialement en saillie par rapport au moyeu de roue **30**, de façon à venir en appui contre une face annulaire d'appui **60** formé sur le bol de transmission **32**. Un deuxième chemin de roulement intérieur **62** est formé sur la deuxième bague intérieure de roulement **36** en regard du deuxième chemin de roulement extérieur **24**. Les billes **16, 18** forment d'une part une première rangée de billes **16** qui roulent sur le premier chemin de roulement extérieur **22** et le premier chemin de roulement intérieur **56**, et d'autre part une deuxième rangée de billes **18** qui roulent sur le deuxième chemin de roulement extérieur **24** et le deuxième chemin de roulement intérieur **62**.

Pour la suite de l'exposé, on s'intéressera à certaines caractéristiques dimensionnelles remarquables de l'assemblage, qui nécessitent quelques définitions préalables. Ainsi, on notera :

- **PP1,** le plan primitif où se trouve le cercle primitif constituant la trajectoire des centres des billes **16** de la première rangée de billes aux dimensions nominales ;

- **PP2,** le plan primitif où se trouve le cercle primitif constituant la trajectoire des centres des billes **18** de la deuxième rangée de billes aux dimensions nominales ;

- **DP1,** le diamètre du cercle primitif de la première rangée de billes **16** ;

- **DP2,** le diamètre du cercle primitif de la deuxième rangée de billes **18** ;

- **CP1,** un cylindre primitif centré sur l'axe de révolution **100** et ayant pour base le cercle primitif de la première rangée de billes **16** ;

- **DC1,** le diamètre des billes **16** de la première rangée de billes ;

- **DC2,** le diamètre des billes **18** de la deuxième rangée de billes ;

- **DI1** un diamètre de fond de chemin du premier chemin de roulement intérieur **56**, défini comme le plus petit diamètre du chemin de roulement **56** ;

- **DI2** un diamètre de fond de chemin du deuxième chemin de roulement intérieur **62**, défini comme le plus petit diamètre du chemin de roulement **62** ;

- **DE1** un diamètre de fond de chemin du premier chemin de roulement extérieur **22**, défini comme le plus grand diamètre du chemin de roulement extérieur **22** ;

- **PB** un plan perpendiculaire à l'axe de révolution **100** et tangent à la face d'extrémité axiale **57** de la deuxième bague intérieure de roulement **36** ;

- **D** la distance entre le plan PB et le premier plan primitif **PP1**.

Le premier plan primitif **PP1** est situé à une distance **L** non nulle du deuxième plan primitif **PP2**. De façon remarquable, le diamètre de fond de chemin **DI2** du deuxième chemin de roulement intérieur **62** est plus grand que le diamètre de fond de chemin **DI1** du premier chemin de roulement intérieur **56**, et de préférence plus grand que le diamètre de fond de chemin **DE1** du premier chemin de roulement extérieur **22**. La deuxième bague intérieure de roulement **36** présente donc une forme qui s'évase à dans la direction opposée au sens de démontage, à partir de la face d'extrémité axiale **57,** ce qui permet de loger une partie du bol de transmission **32** à l'intérieur de la deuxième bague intérieure de roulement **36.** La deuxième bague intérieure de roulement **36** vient se loger dans un volume exigu de contour généralement tronconique, entre la bague extérieure de roulement **20** et le bol de transmission **32.** Pour conférer à la deuxième bague intérieure de roulement **36** une raideur élevée, on prévoit que le diamètre extérieur de la bague intérieure de roulement **36,** mesuré radialement par rapport à l'axe de révolution **100,** augmente rapidement lorsqu'on s'éloigne de la face d'extrémité axiale **57.**

On peut caractériser cet accroissement du diamètre en observant le diamètre extérieur Φ de la deuxième bague intérieure de roulement **36** dans un plan de coupe **PC** perpendiculaire à l'axe de révolution **100** et situé entre le premier plan primitif **PP1** et le deuxième plan primitif **PP2,** à une distance de mesure **DM** du premier plan primitif **PP1** telle que

$$DM = 1,25 \times \frac{DC1}{2}$$

De façon caractéristique, le diamètre extérieur Φ est supérieur à une valeur seuil VS, qui est égale à la plus grande de deux valeurs correspondant respectivement à 110% du diamètre de fond de chemin **DI1** du premier chemin de roulement intérieur **56** et à la somme du diamètre de fond de chemin **DI1** du premier chemin de roulement intérieur **56** et du rayon des billes **16** de la première rangée de billes :

$$\begin{cases} \phi > VS \\ VS = \sup\left(1,1 \times DI1; DI1 + \frac{DC1}{2}\right) \end{cases}$$

Le plan **PB,** dans lequel se trouve l'interface de contact entre la face d'extrémité axiale **57** et la face annulaire d'appui **59,** est situé de préférence entre le premier plan primitif **PP1** et le deuxième plan primitif **PP2,** à une distance **D** du premier plan primitif **PP1** de préférence inférieure à la moitié du diamètre **DC1** des billes **16** de la première rangée de billes. Ce positionnement contribue à une grande compacité axiale et une excellente rigidité de l'ensemble **10.**

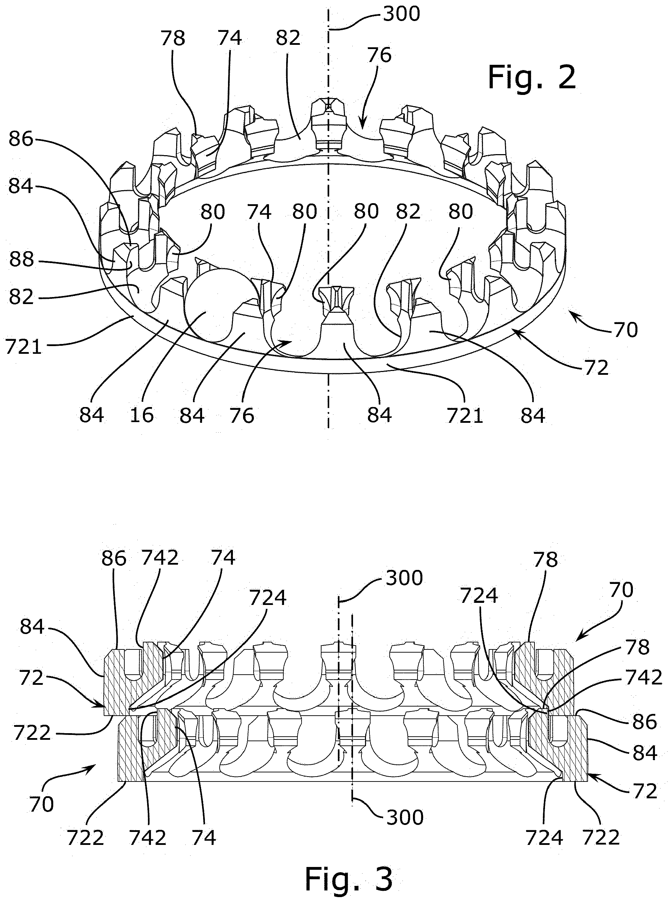

Les billes **16** de la première rangée de billes sont guidées dans le volume entre le premier chemin de roulement intérieur et le premier chemin de roulement extérieur par une première cage de roulement monobloc **70,** illustrée en détail sur la figure **2,** comportant un anneau **72** définissant un axe de référence **300** de la première cage **70** et des griffes de retenue **74** distribuées à la périphérie de l'anneau **72** pour délimiter des alvéoles **76** de logement des billes **16** de la première rangée de billes. L'axe de référence **300** de la première cage de roulement **70** a vocation à être confondu avec l'axe de révolution **100** lorsque l'ensemble rotatif **10** se trouve dans une position de référence.

Il découle de l'augmentation rapide du diamètre extérieur de la deuxième bague intérieure de roulement **36** à proximité immédiate du premier chemin de roulement intérieur **56** un volume réduit pour positionner la première cage de roulement **70.** Afin de maximiser, dans l'espace situé entre le premier plan primitif **PP1** et le deuxième plan primitif **PP2,** le volume disponible pour la deuxième bague de roulement intérieure **36,** on prévoit avantageusement que l'anneau **72** de la première cage de roulement soit positionné d'un côté du premier plan primitif **PP1** opposé au deuxième plan primitif **PP2.** Les griffes de retenue **74** s'étendent depuis l'anneau en direction du deuxième plan primitif **PP2** en traversant le premier plan primitif **PP1.** La première cage est donc dépourvue d'anneau situé entre le premier plan primitif **PP1** et le deuxième plan primitif **PP2,** de sorte que les griffes de retenue **74** présentent une extrémité distale **78** libre. Les alvéoles **76** sont délimitées chacune par deux griffes de retenue **74** adjacentes parmi les griffes de retenue de la première cage de roulement **70** et par une portion de l'anneau **72** reliant les deux griffes de retenue adjacentes **74.**

Pour chacune des alvéoles **76,** les deux griffes de retenue **74** adjacentes comportent chacune une facette de guidage de retenue **80** concave tournée vers la bille **16** logée dans l'alvéole **76,** et la portion d'anneau **721** reliant les deux griffes de retenue **74** adjacentes comporte une facette de guidage **82** d'extrémité tournée vers la bille **16** logée dans l'alvéole. La facette de guidage d'extrémité **82** se trouve au moins partiellement radialement à l'extérieur d'un premier cylindre primitif **CP1** ayant pour base le cercle primitif de la première rangée de billes **16** et centré sur l'axe de révolution **100.** Les facettes de guidage de retenue **80** se trouvent au moins partiellement à l'intérieur du premier cylindre primitif **CP1** et au moins partiellement entre le premier plan primitif **PP1** et le deuxième plan primitif **PP2.**

Dans ce mode de réalisation, la première cage de roulement **70** comporte en outre des griffes additionnelles **84** distribuées à la périphérie de l'anneau **72,** chacune des griffes additionnelles **84** étant associée à l'une des griffes de retenue **74** et présentant une extrémité distale libre **86** située radialement à l'extérieur et en regard de la griffe de retenue associée **74.** Pour chacune des alvéoles, les deux griffes additionnelles **84** associées aux deux griffes de retenue **74** adjacentes comportent chacune une facette de guidage additionnelle concave **88** tournée vers la bille **16** logée dans l'alvéole **76,** les facettes de guidage additionnelles **88** se trouvant au moins partiellement à l'extérieur du premier cylindre primitif **CP1** et au moins partiellement entre le premier plan primitif **PP1** et le deuxième plan primitif **PP2.** On réalise ainsi une cage enveloppante **70,** au sens où les billes **16** ne peuvent être insérées dans les alvéoles et ne peuvent en être extraites qu'en déformant élastiquement les griffes de retenue **74** ou les griffes additionnelles **84,** ou les griffes de retenue **74** et les griffes additionnelles **84** simultanément. Ainsi, on ne court pas de risque de perte d'une bille lors du montage.

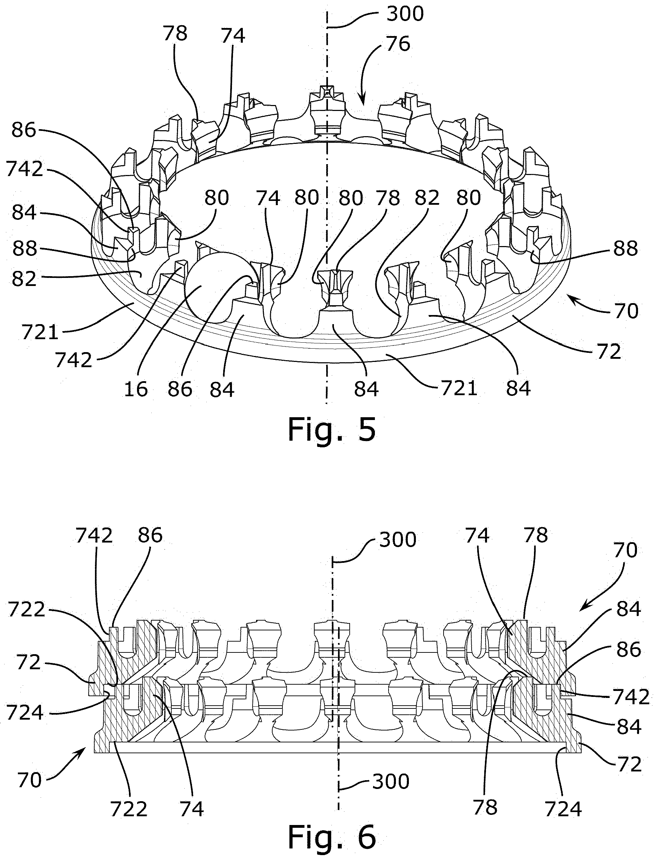

L'anneau **72** de la première cage de roulement **70** comporte une face annulaire plane d'empilement **722** tourné axialement à l'opposé des griffes de retenue **74**, et une portée de centrage **724** ayant une symétrie de révolution autour d'un axe de symétrie **300** de la première cage de roulement **70**. Les extrémités libres **86** des griffes additionnelles **84** sont tournées axialement à l'opposé de la face annulaire plane d'empilement **722**, en superposition avec la face annulaire plane d'empilement **722** vu en projection orthogonale sur un plan d'empilement contenant la face plane d'empilement **722**. Les griffes de retenue **74** comportent quant à elles des facettes de centrage **742**, tournées radialement à l'opposé de la portée de centrage **724**, de manière telle que, vu en projection orthogonale sur le plan d'empilement, les facettes de centrage **742** font face à la portée de centrage **724**. Ainsi, lorsque deux cages de roulement identiques à la première cage de roulement monobloc **70** sont empilées l'une sur l'autre avant leur montage dans l'ensemble rotatif **10**, comme illustré sur les figures **3 et 6**, les extrémités libres **86** des griffes additionnelles **84** d'une cage de roulement **70** viennent en appui sur la face annulaire d'empilement **722** de la cage de roulement **70** adjacente, alors que les facettes de centrage **742** viennent en regard de la portée de centrage **724**, ce qui assure un positionnement relatif maîtrisé des deux cages de roulement **70**, et leur évite de se retrouver enchevêtrées de façon inextricable.

Les billes **18** de la deuxième rangée de billes sont guidées dans le volume entre le deuxième chemin de roulement intérieur **62** et le deuxième chemin de roulement extérieur **24** par une deuxième cage de roulement monobloc **90**, comportant un anneau **92** définissant un axe de référence de la deuxième cage et des griffes de retenue **94** distribuées à la périphérie de l'anneau **92** pour délimiter des alvéoles de logement des billes **18** de la deuxième rangée de billes.

Afin de maximiser, dans l'espace situé entre le premier plan primitif **PP1** et le deuxième plan primitif **PP2**, le volume disponible pour la deuxième bague intérieure de roulement **36** et la bague extérieure de roulement **20**, l'anneau **92** est positionné de préférence d'un côté du deuxième plan primitif **PP2** opposé au premier plan primitif **PP1**. Les griffes de retenue **94** font saillie depuis l'anneau en direction du premier plan primitif **PP1** en traversant le deuxième plan primitif **PP2**. Les griffes de retenue **94** présentent une extrémité distale libre **98**, des alvéoles étant délimitées chacune par deux griffes de retenue **94** adjacentes parmi les griffes de retenue de la deuxième cage de roulement **90** et par une portion de l'anneau **92** reliant les deux griffes de retenue **94** adjacentes. La deuxième cage de roulement **90** est par ailleurs essentiellement la même configuration que la première cage de roulement **70**, avec naturellement des dimensions adaptées au diamètre des billes **18** et au diamètre primitif de la deuxième rangée de billes **18**.

Les chemins extérieurs de roulement **22, 24** formés sur la bague extérieure de roulement **20** sont enveloppants en direction axiale, au sens où ils présentent chacun un fond de chemin **64, 66**, situé dans une position intermédiaire entre les extrémités axiales du chemin de roulement correspondant **22, 24**.

Dans ce mode de réalisation, les billes formant la première rangée de billes **16** ont - un diamètre **DC1** préférence inférieur ou égal au diamètre **DC2** des billes formant la deuxième rangée de billes **18**. Choisir un diamètre relativement faible pour la première rangée de billes **16** permet de conserver une épaisseur axiale suffisante de la deuxième bague de roulement intérieure **36** dans la région de frettage sur le moyeu de roue **30**, à proximité de la première rangée de billes **16**, et de rapprocher l'un de l'autre les plans primitifs **PP1** et **PP2**. Le choix d'un diamètre plus important pour la deuxième rangée de billes **18** permet d'assurer une bonne tenue à la charge, tout en conservant une distance relativement faible entre les deux plans primitifs **PP1** et **PP2**.

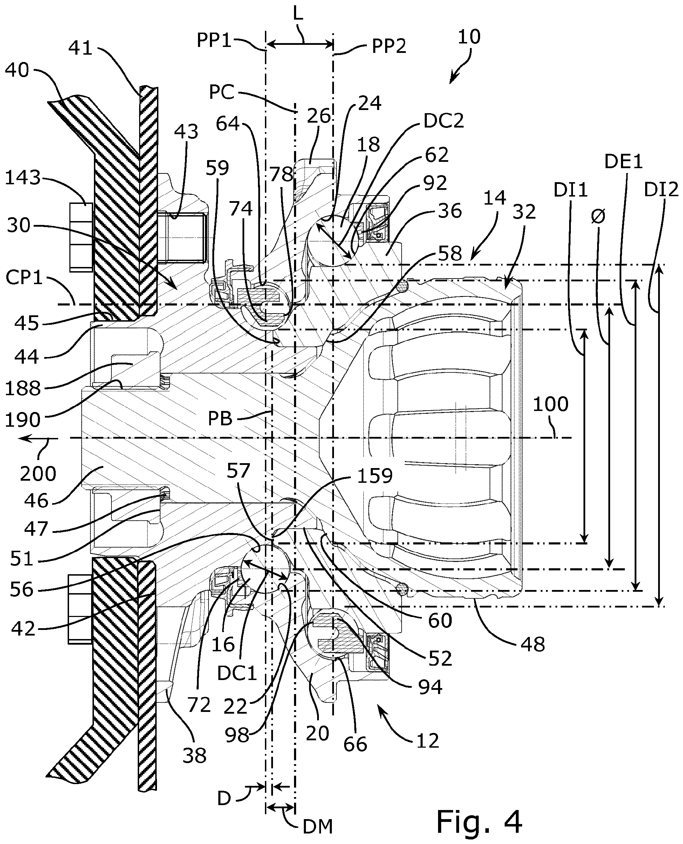

Le mode de réalisation de la figure **4** diffère de celui de la figure **1** par le fait que le premier chemin de roulement intérieur **56** est formé directement sur le moyeu de roue **30**, qui constitue ainsi la première bague intérieure de roulement **34** et présente une portée de frettage **52** et un épaulement **159**. La deuxième bague intérieure de roulement **36** est ainsi frettée sur la portée de frettage **52** et axialement en appui contre l'épaulement **159** du moyeu de roue **30**, et contre la face annulaire d'appui **60** du bol de transmission **32**.

Sur les figures **5** à **6** est illustrée une variante de la première cage de roulement **70**, destinée à équiper l'ensemble ensemble rotatif de guidage d'une roue motrice de véhicule automobile **10** de la figure **1**, ou de la figure **4**. La première cage de roulement **70** des figures **5** et **6** se distingue des précédentes notamment par le positionnement de la première face d'empilement **722**, qui est située en retrait par rapport à une extrémité axiale d'anneau **72** de la cage de roulement **70**, et par le positionnement et des facettes de centrage **742**, qui sont formées sur les griffes additionnelles **84**. On a illustré en particulier sur la figure **6** la coopération entre les facettes de centrage **742** et la portée de centrage **724**, et entre les extrémités libres **86** des griffes additionnelles **84** et la face annulaire d'empilement **722** pour permettre un empilement des premières cages de roulement **70** les unes sur les autres sur une chaîne d'assemblage de l'ensemble rotatif **10**.

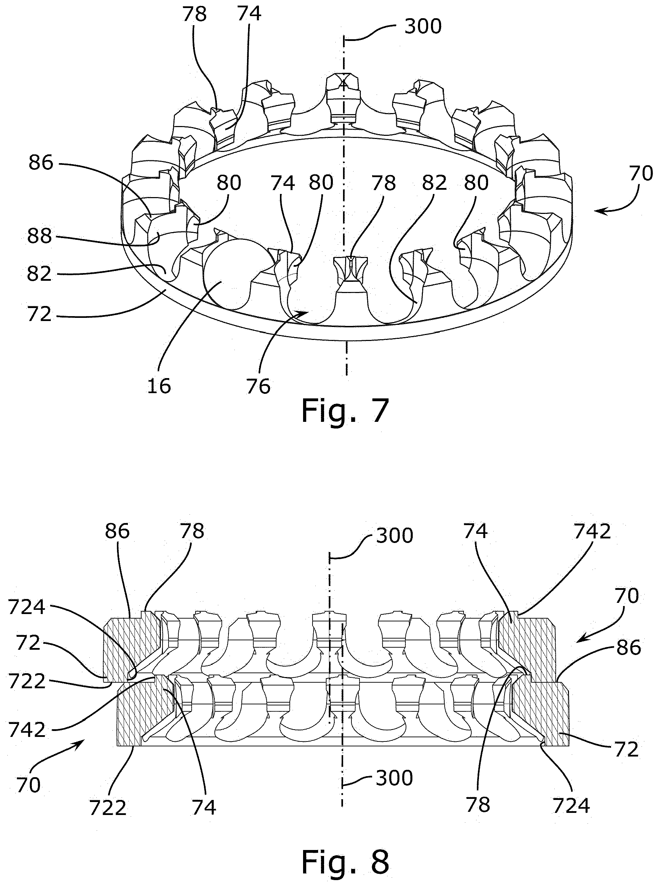

Sur les figures **7** et **8** est illustrée une autre variante de la première cage de roulement **70**, destinée à équiper l'ensemble ensemble rotatif de guidage d'une roue motrice de véhicule automobile **10** de la figure **1**, ou de la figure **4**. La première cage de roulement **70** des figures **7** et **8** se distingue des précédentes par le fait qu'elle ne comporte qu'un jeu de griffes de retenue **74** massive, et pas de griffes additionnelles. Les griffes de retenue **74** présentent des facettes de guidage de retenue **80** qui sont destinées à se situer au moins partiellement à l'intérieur du premier cylindre primitif **CP1** et au moins partiellement entre le premier plan primitif **PP1** et le deuxième plan primitif **PP2,** et des facettes de guidage additionnelles **88** destinée à se situer au moins partiellement à l'extérieur du premier cylindre primitif **CP1** et au moins partiellement entre le premier plan primitif **PP1** et le deuxième plan primitif **PP2.** On réalise ainsi une cage enveloppante **70,** au sens où les billes **16** ne peuvent être insérées dans les alvéoles et ne peuvent en être extraites qu'en déformant élastiquement les griffes de retenue **74.** Dans les modes de réalisation des figures **-5** à **8,** les billes **16** sont montées dans la première cage de roulement **70** par un mouvement ayant une composante radiale soit nulle, soit orientée vers l'axe de référence **300.**

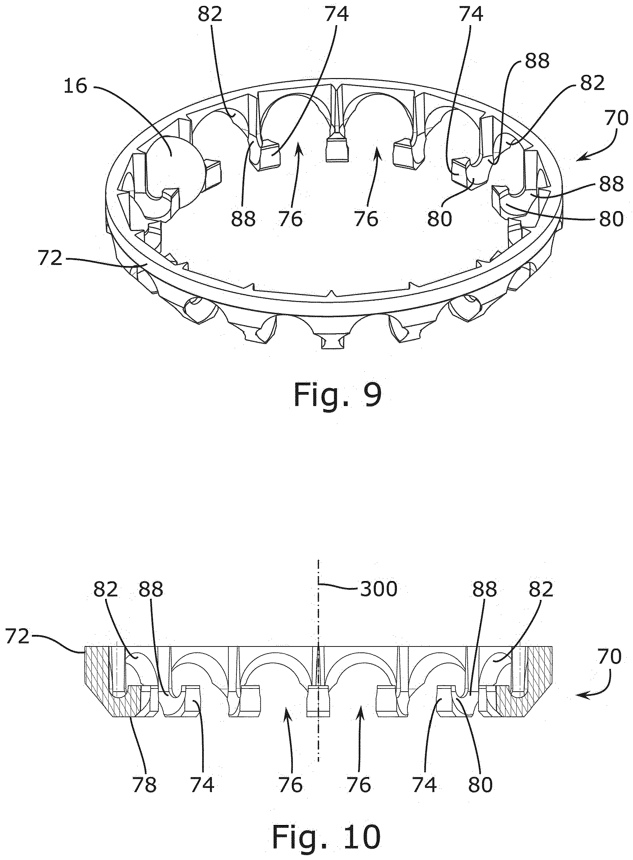

Sur les figures **9** et **10** est illustrée une autre variante de la première cage de roulement **70,** destinée à équiper l'ensemble ensemble rotatif de guidage d'une roue motrice de véhicule automobile **10** de la figure **1,** ou de la figure **4.** La première cage de roulement **70** des figures **9** et **10** se distingue des précédentes par le fait qu'elle ne comporte qu'un jeu de griffes de retenue **74** en forme de crochet, et pas de griffes additionnelles. Les griffes de retenue **74** présentent des facettes de guidage de retenue **80** qui sont destinées à se situer au moins partiellement à l'intérieur du premier cylindre primitif **CP1** et au moins partiellement entre le premier plan primitif **PP1** et le deuxième plan primitif **PP2,** et des facettes de guidage additionnelles **88** destinée à se situer au moins partiellement à l'extérieur du premier cylindre primitif **CP1** et au moins partiellement entre le premier plan primitif **PP1** et le deuxième plan primitif **PP2.** On réalise ainsi une cage enveloppante **70,** au sens où les billes **16** ne peuvent être insérées dans les alvéoles et ne peuvent en être extraites qu'en déformant élastiquement les griffes de retenue **74.** Ce mode de réalisation de la première cage de roulement **70** diffère des précédents également par le fait que les billes **16** sont montées dans la cage de roulement **70** par un mouvement ayant une composante radiale allant de l'intérieur vers l'extérieur de la cage de roulement **70.**

Dans tous les modes de réalisation, les deuxièmes cages de roulement **90** peuvent être similaires aux premières cages de roulement **70.**

En variante, les billes **16, 18** des deux rangées de billes peuvent avoir le même diamètre.

En variante, il est possible de prévoir un sous-ensemble fixe en plusieurs pièces, avec une bride **26** en une ou plusieurs pièces formant la bride de fixation à un élément de suspension du véhicule, et deux bagues extérieures de roulement coaxiales frettées dans cette bride.

Il est souligné que toutes les caractéristiques, telles qu'elles se dégagent pour un homme du métier à partir de la présente description, des dessins et des revendications attachées, même si concrètement elles n'ont été décrites qu'en relation avec d'autres caractéristiques déterminées, tant individuellement que dans des combinaisons quelconques, peuvent être combinées à d'autres caractéristiques ou groupes de caractéristiques divulguées ici, pour autant que cela n'a pas été expressément exclu ou que des circonstances techniques ne rendent de telles combinaisons impossibles ou dénuées de sens, tant que ces caractéristiques ou leur combinaisons restent dans le cadre des revendications ci-jointes.

Dans l'ensemble du texte de la présente demande, on a appelé sous-ensemble fixe un sous-ensemble qui constitue un référentiel fixe pour la rotation du sous-ensemble mobile. L'homme du métier aura compris que ce sous-ensemble est lui-même appelé à bouger par rapport à la caisse du véhicule, en fonction de la géométrie de suspension interposée entre la caisse du véhicule et le sous-ensemble fixe.

**Revendications**

1. Ensemble rotatif (10), comportant :

   - un sous-ensemble extérieur (12) comportant un premier chemin de roulement extérieur annulaire (22) et un deuxième chemin de roulement extérieur annulaire (24) centrés sur un axe de révolution (100) commun ;

   - un sous-ensemble intérieur (14) comportant une première bague intérieure de roulement (30, 34) sur laquelle est formé un premier chemin de roulement intérieur (56), le premier chemin de roulement intérieur (56) ayant un diamètre de fond de chemin DI1, et une deuxième bague intérieure de roulement (36) sur laquelle est formée un deuxième chemin de roulement intérieur (62), le deuxième chemin de roulement intérieur (62) ayant un diamètre de fond de chemin DI2 plus grand que le diamètre de fond de chemin DI1 du premier chemin de roulement intérieur (56), la deuxième bague intérieure de roulement (36) et la première bague intérieure de roulement (30, 34) étant fixes l'une par rapport à l'autre ; et

   - des billes (16, 18) formant une première rangée de billes (16) aptes à rouler sur le premier chemin de roulement extérieur (22) et le premier chemin de roulement intérieur (56) et une deuxième rangée de billes (18) aptes à rouler sur le deuxième chemin de roulement extérieur (24) et le deuxième chemin de roulement intérieur (62) pour guider le sous-ensemble extérieur (12) et le sous-ensemble intérieur (14) l'un par rapport à l'autre en rotation autour de l'axe de révolution (100), les billes (16) de la première rangée de billes ayant un diamètre DC1, un premier plan primitif (PP1) contenant les centres des billes (16) de la première rangée de billes étant situé à une distance L non nulle d'un deuxième plan primitif (PP2) contenant les centres des billes (18) de la deuxième rangée de billes ;

**caractérisé en ce que** :

- la deuxième bague intérieure de roulement (36) présente un diamètre extérieur ($\Phi$), mesuré dans un plan de coupe (PC) perpendiculaire à l'axe de révolution (100) et situé entre le premier plan primitif (PP1) et le deuxième plan primitif (PP2), à une distance de mesure DM du premier plan primitif (PP1), qui est supérieur à une valeur donnée seuil VS, où :

$$\begin{cases} DM = 1{,}25 \times \dfrac{DC1}{2} \\ VS = \sup\left(1{,}1 \times DI1 ; DI1 + \dfrac{DC1}{2}\right) \end{cases}$$

2. Ensemble rotatif (10) selon la revendication 1, **caractérisé en ce que** la deuxième bague intérieure de roulement (36) comporte une face d'extrémité axiale (57) tournée axialement vers le premier plan primitif (PP1), en appui axial contre une face d'appui (59) de la première bague intérieure de roulement (30, 34), la face d'extrémité axiale (57) étant positionnée dans un plan transversal (PB) situé entre le premier plan primitif (PP1) et le deuxième plan primitif (PP2), à une distance D du premier plan primitif (PP1) de préférence inférieure à la moitié du diamètre DC1 des billes (16) de la première rangée de billes.

3. Ensemble rotatif (10) selon l'une quelconque des revendications précédentes, **caractérisé en ce qu'**il comporte en outre une première cage de roulement monobloc (70), la première cage de roulement monobloc (70) comportant un anneau (72) définissant un axe de référence (300) de la première cage de roulement (70) et des griffes de retenue (74) distribuées à la périphérie de l'anneau (72) pour délimiter des alvéoles (76) de logement des billes (16) de la première rangée de billes (16).

4. Ensemble rotatif (10) selon la revendication 3, **caractérisé en ce que** l'anneau (72) est positionné d'un côté du premier plan primitif (PP1) opposé au deuxième plan primitif (PP2), les griffes de retenue (74) faisant saillie depuis l'anneau (72) en direction du deuxième plan primitif (PP2) en traversant le premier plan primitif (PP1), les griffes de retenue (74) présentant une extrémité distale libre (78), les alvéoles (76) étant délimitées chacune par deux griffes de retenue (74) adjacentes parmi les griffes de retenue (74) de la première cage monobloc (70) et par une portion de l'anneau (721) reliant les deux griffes de retenue (74) adjacentes.

5. Ensemble rotatif (10) selon la revendication 4, **caractérisé en ce que** pour chacune des alvéoles (76), les deux griffes de retenue (74) adjacentes comportent chacune une facette de guidage de retenue (80) concave tournée vers la bille (16) logée dans l'alvéole (76), les facettes de guidage de retenue (80) se trouvant de préférence au moins partiellement à l'intérieur d'un premier cylindre primitif (CP1) ayant pour base un premier cercle primitif passant par les centres des billes de la première rangée de billes (16) et centré sur l'axe de révolution (100), les facettes de guidage de retenue (80) se trouvant de préférence au moins partiellement entre le premier plan primitif (PP1) et le deuxième plan primitif (PP2).

6. Ensemble rotatif (10) selon la revendication 5, **caractérisé en ce que** pour chacune des alvéoles (76), la portion d'anneau (721) reliant les deux griffes de retenue (74) adjacentes comporte une facette de guidage d'extrémité (82) tournée vers la bille (16) logée dans l'alvéole (76), la facette de guidage d'extrémité (82) se trouvant de préférence au moins partiellement radialement à l'extérieur du premier cylindre primitif (CP1).

7. Ensemble rotatif (10) selon l'une quelconque des revendications 4 à 6, **caractérisé en ce que** la première cage de roulement (70) comporte en outre des griffes additionnelles (84) distribuées à la périphérie de l'anneau (72), chacune des griffes additionnelles (84) étant associée à l'une des griffes de retenue (74) et présentant une extrémité distale libre (86) située radialement à l'extérieur et en regard de la griffe de retenue (74) associée.

8. Ensemble rotatif (10) selon la revendication 7, **caractérisé en ce que** pour chacune des alvéoles (76), les deux griffes additionnelles (84) associées aux deux griffes de retenue (74) adjacentes comportent chacune une facette de guidage additionnelle (88) concave tournée vers la bille (16) logée dans l'alvéole (76), les facettes de guidage additionnelles (88) se trouvant au moins partiellement à l'extérieur du premier cylindre primitif (CP1) et au moins partiellement entre le premier plan primitif (PP1) et le deuxième plan primitif (PP2).

9. Ensemble rotatif (10) selon la revendication 5, **caractérisé en ce que** pour chacune des alvéoles (76), les deux griffes de retenue (74) adjacentes comportent chacune une facette de guidage additionnelle (88) concave tournée vers la bille (16) logée dans l'alvéole (76), les facettes de guidage additionnelles (88) se trouvant au moins partiellement à l'extérieur du premier cylindre primitif (CP1) et au moins partiellement entre le premier plan primitif (PP1) et le deuxième plan primitif (PP2).

10. Ensemble rotatif (10) selon l'une quelconque des revendications 3 à 8, **caractérisé en ce que** l'anneau (72) de la première cage de roulement (70) comporte en outre une face annulaire plane d'empilement (722) tourné axialement à l'opposé des griffes de retenue (74), et une portée de centrage (724) ayant une symétrie de révolution autour de l'axe de référence (300) de la première cage de roulement (70), la première cage de roulement (70) comportant en outre des facettes planes (86) tournées axialement à l'opposé de la face annulaire d'empilement (722), en superposition avec la face annulaire plane d'empilement vu en projection orthogonale sur un plan d'empilement contenant la face annulaire plane d'empilement (722), et des facettes de centrage (742), tournées radialement à l'opposé de la portée de centrage (724), de manière telle que, vu en projection orthogonale sur le plan d'empilement, les facettes de centrage (742) font face à la portée de centrage (724).

11. Ensemble rotatif (10) selon l'une quelconque des revendications précédentes, **caractérisé en ce qu'**il comporte en outre une deuxième cage de roulement monobloc (90), comportant un anneau (92) définissant un axe de référence de la deuxième cage de roulement (90) et des griffes de retenue (94) distribuées à la périphérie de l'anneau (92) de la deuxième cage de roulement (90) pour délimiter des alvéoles de logement des billes (18) de la deuxième rangée de billes (18), l'anneau (92) de la deuxième cage de roulement (90) étant positionné de préférence d'un côté du deuxième plan primitif (PP2) opposé au premier plan primitif (PP1), les griffes de retenue (94) de la deuxième cage de roulement (90) faisant saillie depuis l'anneau (92) de la deuxième cage de roulement (90) en direction du premier plan primitif (PP1) en traversant le deuxième plan primitif (PP2), les griffes de retenue (94) de la deuxième cage de roulement (90) présentant une extrémité distale libre (98), les alvéoles étant délimitées chacune par deux griffes de retenue adjacentes parmi les griffes de retenue (94) de la deuxième cage de roulement (90) et par une portion de l'anneau (92) reliant les deux griffes de retenue (94) adjacentes.

12. Ensemble rotatif (10) selon l'une quelconque des revendications précédentes, **caractérisé en ce que** les billes formant la première rangée de billes (16) ont un diamètre de bille DC1 inférieur ou égal à un diamètre de billes DC2 des billes formant la deuxième rangée de billes (18).

13. Ensemble rotatif (10) selon l'une quelconque des revendications précédentes, **caractérisé en ce que** la deuxième bague intérieure de roulement (36) est frettée sur une portée de frettage (52) de la première bague intérieure de roulement (30, 34).

14. Ensemble rotatif (10) selon l'une quelconque des revendications précédentes, **caractérisé en ce que** le sous-ensemble extérieur (12) constitue un sous-ensemble fixe (12) d'un guidage de roue motrice (10) de véhicule automobile, et le sous-ensemble intérieur (14) constitue un sous-ensemble tournant (14) du guidage de roue motrice (10) de véhicule automobile, apte à tourner par rapport au sous-ensemble fixe (12) autour de l'axe de révolution (100), le sous-ensemble tournant comportant un moyeu de roue (30) comportant un flasque (38) pourvu d'une interface de fixation d'une jante de roue (40) ou d'un disque de frein (41), le flasque de fixation (38) formant une face (42) de montage de la jante de roue (40) ou du disque de frein (41) tournée axialement dans un sens de démontage (200) de la jante de roue (40) ou du disque de frein (41), le sens de démontage (200) étant parallèle à l'axe de révolution (100), la première bague intérieure de roulement (30, 34) étant constituée par le moyeu de roue (30) ou frettée sur le moyeu de roue (30), la deuxième bague intérieure de roulement (36) étant frettée sur une portée de frettage (52) du moyeu de roue (30).

15. Ensemble rotatif (10) selon la revendication 14, **caractérisé en ce que** le sous-ensemble tournant comporte en outre un bol de transmission (32), la bague intérieure de roulement (36) étant en appui contre le bol de transmission (32) au niveau d'une interface de contact annulaire (58, 60) s'étendant au moins dans une direction radiale par rapport à l'axe de révolution (100).

16. Ensemble rotatif (10) selon la revendication 15, **caractérisé en ce que** l'interface de contact annulaire (58, 60) est positionnée au moins partiellement, et de préférence complètement, entre le premier plan primitif (PP1) et le deuxième plan primitif (PP2).

17. Ensemble rotatif (10) selon l'une quelconque des revendications 14 à 16, **caractérisé en ce que** le moyeu de roue (30) est une pièce métallique massive monobloc.

**Patentansprüche**

1. Rotationsanordnung (10), umfassend:

    - eine äußere Unteranordnung (12), umfassend eine erste ringförmige äußere Laufbahn (22) und eine zweite ringförmige äußere Laufbahn (24), die auf einer gemeinsamen Drehachse (100) zentriert sind;
    - eine innere Unteranordnung (14), umfassend einen ersten inneren Lagerring (30, 34), auf dem eine erste innere Laufbahn (56) ausgebildet ist, wobei die erste innere Laufbahn (56) einen Bahngrunddurchmesser DI1 vorweist, und einen zweiten inneren Lagerring (36), auf dem eine zweite innere Laufbahn (62) ausgebildet ist, wobei die zweite innere Laufbahn (62) einen Bahngrunddurchmesser DI2 vorweist, der größer ist als der Bahngrunddurchmesser DI1 der ersten inneren Laufbahn (56), wobei der zweite innere Lagerring (36) und der erste innere Lagerring (30, 34) relativ zueinander feststehend sind; und

- Kugeln (16, 18), die eine erste Reihe von Kugeln (16), die dazu geeignet sind, auf der ersten äußeren Laufbahn (22) und der ersten inneren Laufbahn (56) zu rollen, und eine zweite Reihe von Kugeln (18) bilden, die dazu geeignet sind, auf der zweiten äußeren Laufbahn (24) und der zweiten inneren Laufbahn (62) zu rollen, um die äußere Unteranordnung (12) und die innere Unteranordnung (14) relativ zueinander in Drehung um die Drehachse (100) zu führen, wobei die Kugeln (16) der ersten Kugelreihe einen Durchmesser DC1 vorweisen, wobei eine erste Wälzebene (PP1), die die Mittelpunkte der Kugeln (16) der ersten Kugelreihe enthält, sich in einem Abstand L ungleich Null von einer zweiten Wälzebene (PP2), die die Mittelpunkte der Kugeln (18) der zweiten Kugelreihe enthält, befindet;

**dadurch gekennzeichnet, dass:**

- der zweite innere Lagerring (36) einen Außendurchmesser (Φ) aufweist, der, gemessen in einer Schnittebene (PC), die senkrecht zur Drehachse (100) verläuft und sich zwischen der ersten Wälzebene (PP1) und der zweiten Wälzebene (PP2) in einem Messabstand DM von der ersten Wälzebene (PP1) befindet, größer als ein gegebener Schwellenwert VS ist, wobei:

$$\begin{cases} DM = 1{,}25 \times \dfrac{DC1}{2} \\ VS = \sup\left(1{,}1 \times DI1; DI1 + \dfrac{DC1}{2}\right) \end{cases}$$

2. Rotationsanordnung (10) nach Anspruch 1, **dadurch gekennzeichnet, dass** der zweite innere Lagerring (36) eine axiale Endfläche (57) umfasst, die axial der ersten Grundfläche (PP1) zugewandt ist und axial an einer Anlagefläche (59) des ersten inneren Lagerrings (30, 34) anliegt, wobei die axiale Endfläche (57) in einer Querebene (PB) positioniert ist, die sich zwischen der ersten Wälzebene (PP1) und der zweiten Wälzebene (PP2) befindet, in einem Abstand D von der ersten Wälzebene (PP1), der vorzugsweise kleiner ist als die Hälfte des Durchmessers DC1 der Kugeln (16) der ersten Kugelreihe.

3. Rotationsanordnung (10) nach einem der vorhergehenden Ansprüche, **dadurch gekennzeichnet, dass** sie außerdem einen ersten einteiligen Lagerkäfig (70) umfasst, wobei der erste einteilige Lagerkäfig (70) einen Ring (72), der eine Bezugsachse (300) des ersten Lagerkäfigs (70) definiert, und Halteklammern (74), die am Umfang des Rings (72) verteilt sind, um Zellen (76) zur Lagerung der Kugeln (16) der ersten Kugelreihe (16) zu begrenzen, umfasst.

4. Rotationsanordnung (10) nach Anspruch 3, **dadurch gekennzeichnet, dass** der Ring (72) auf einer Seite der ersten Wälzebene (PP1) gegenüber der zweiten Wälzebene (PP2) positioniert ist, wobei die Halteklammern (74) von dem Ring (72) in Richtung der zweiten Wälzebene (PP2) durch die erste Wälzebene (PP1) hindurch vorstehen, wobei die Halteklammern (74) ein freies distales Ende (78) aufweisen, wobei die Zellen (76) jeweils durch zwei benachbarte Halteklammern (74) unter den Halteklammern (74) des ersten einteiligen Käfigs (70) und durch einen Abschnitt des Rings (721), der die beiden benachbarten Halteklammern (74) verbindet, begrenzt sind.

5. Rotationsanordnung (10) nach Anspruch 4, **dadurch gekennzeichnet, dass** für jede der Zellen (76) die beiden benachbarten Halteklammern (74) jeweils eine konkave Halteführungsfacette (80) umfassen, die der in der Zelle (76) gelagerten Kugel (16) zugewandt ist, wobei die Halteführungsfacetten (80) sich vorzugsweise zumindest teilweise innerhalb eines ersten Wälzzylinders (CP1) befinden, der als Basis einen ersten Teilkreis vorweist, der durch die Mittelpunkte der Kugeln der ersten Kugelreihe (16) verläuft und auf die Drehachse (100) zentriert ist, wobei sich die Halteführungsfacetten (80) vorzugsweise zumindest teilweise zwischen der ersten Wälzebene (PP1) und der zweiten Wälzebene (PP2) befinden.

6. Rotationsanordnung (10) nach Anspruch 5, **dadurch gekennzeichnet, dass** bei jeder der Zellen (76) der Abschnitt des Rings (721), der die beiden benachbarten Halteklammern (74) verbindet, eine Endführungsfacette (82) umfasst, die der in der Zelle (76) gelagerten Kugel (16) zugewandt ist, wobei sich die Endführungsfacette (82) vorzugsweise zumindest teilweise radial außerhalb des ersten Wälzzylinders (CP1) befindet.

7. Rotationsanordnung (10) nach einem der Ansprüche 4 bis 6, **dadurch gekennzeichnet, dass** der erste Lagerkäfig (70) außerdem zusätzliche Klammern (84) umfasst, die am Umfang des Rings (72) verteilt sind, wobei jede der zusätzlichen Klammern (84) einer der Halteklammern (74) zugeordnet ist und ein freies distales Ende (86) aufweist, das sich radial außerhalb und gegenüber der zugeordneten Halteklammer (74) befindet.

8. Rotationsanordnung (10) nach Anspruch 7, **dadurch gekennzeichnet, dass** für jede der Zellen (76) die beiden zusätzlichen Klammern (84), die den beiden benachbarten Halteklammern (74) zugeordnet sind, jeweils eine zusätzliche konkave Führungsfacette (88) umfassen, die der in der Zelle (76) gelagerten Kugel (16) zugewandt ist, wobei sich die zusätzlichen Führungsfacetten (88) zumindest teilweise außerhalb des ersten Wälzzylinders (CP1) und zumindest teilweise zwischen der ersten Wälzebene (PP1) und der zweiten Wälzebene (PP2) befinden.

9. Rotationsanordnung (10) nach Anspruch 5, **dadurch gekennzeichnet, dass** für jede der Zellen (76) die beiden benachbarten Halteklammern (74) jeweils eine zusätzliche konkave Führungsfacette (88) umfassen, die der in der Zelle (76) gelagerten Kugel (16) zugewandt ist, wobei sich die zusätzlichen Führungsfacetten (88) zumindest teilweise außerhalb des ersten Wälzzylinders (CP1) und zumindest teilweise zwischen der ersten Wälzebene (PP1) und der zweiten Wälzebene (PP2) befinden.

10. Rotationsanordnung (10) nach einem der Ansprüche 3 bis 8, **dadurch gekennzeichnet, dass** der Ring (72) des ersten Lagerkäfigs (70) außerdem eine ringförmige, ebene Stapelfläche (722) umfasst, die axial von den Halteklammern (74) abgewandt ist, und einen Zentriersitz (724), der eine Drehsymmetrie um die Bezugsachse (300) des ersten Lagerkäfigs (70) vorweist, wobei der erste Lagerkäfig (70) außerdem ebene Facetten (86), die axial von der ringförmigen Stapelfläche (722) abgewandt sind, in Überlagerung mit der ringförmigen ebenen Stapelfläche, gesehen in orthogonaler Projektion auf eine Stapelebene, die die ringförmige ebene Stapelfläche (722) enthält, und Zentrierfacetten (742) umfasst, die radial von dem Zentriersitz (724) abgewandt sind, so dass die Zentrierfacetten (742), gesehen in einer orthogonalen Projektion auf die Stapelebene, dem Zentriersitz (724) zugewandt sind.

11. Rotationsanordnung (10) nach einem der vorhergehenden Ansprüche, **dadurch gekennzeichnet, dass** sie außerdem einen zweiten einteiligen Lagerkäfig (90), der einen Ring (92), der eine Bezugsachse des zweiten Lagerkäfigs (90) definiert, und Halteklammern (94) umfasst, die am Umfang des Rings (92) des zweiten Lagerkäfigs (90) verteilt sind, um Zellen zur Lagerung der Kugeln (18) der zweiten Reihe von Kugeln (18) zu begrenzen, wobei der Ring (92) des zweiten Lagerkäfigs (90) vorzugsweise auf einer Seite der zweiten Wälzebene (PP2) positioniert ist, die der ersten Wälzebene (PP1) gegenüberliegt, wobei die Halteklammern (94) des zweiten Lagerkäfigs (90) von dem Ring (92) des zweiten Lagerkäfigs (90) in Richtung der ersten Wälzebene (PP1) durch die zweite Wälzebene (PP2) hindurch vorstehen, wobei die Halteklammern (94) des zweiten Lagerkäfigs (90) ein freies distales Ende (98) aufweisen, wobei die Zellen jeweils durch zwei benachbarte Halteklammern der Halteklammern (94) des zweiten Lagerkäfigs (90) und durch einen Abschnitt des Rings (92), der die beiden benachbarten Halteklammern (94) verbindet, begrenzt sind.

12. Rotationsanordnung (10) nach einem der vorhergehenden Ansprüche, **dadurch gekennzeichnet, dass** die Kugeln, die die erste Reihe von Kugeln (16) bilden, einen Kugeldurchmesser DC1 vorweisen, der kleiner als oder gleich einem Kugeldurchmesser DC2 der Kugeln ist, die die zweite Reihe von Kugeln (18) bilden.

13. Rotationsanordnung (10) nach einem der vorhergehenden Ansprüche, **dadurch gekennzeichnet, dass** der zweite innere Lagerring (36) auf einen Schrumpfsitz (52) des ersten inneren Lagerrings (30, 34) aufgeschrumpft ist.

14. Rotationsanordnung (10) nach einem der vorhergehenden Ansprüche, **dadurch gekennzeichnet, dass** die äußere Unteranordnung (12) eine feste Unteranordnung (12) einer Führung eines Antriebsrads (10) eines Kraftfahrzeugs schafft und die innere Unteranordnung (14) eine drehende Unteranordnung (14) der Führung des Antriebsrads (10) eines Kraftfahrzeugs schafft, die dazu geeignet ist, sich in Bezug auf die feststehende Unteranordnung (12) um die Drehachse (100) zu drehen, wobei die drehende Unteranordnung eine Radnabe (30) umfasst, die einen Flansch (38) umfasst, der mit einer Schnittstelle zur Befestigung einer Radfelge (40) oder einer Bremsscheibe (41) versehen ist, wobei der Befestigungsflansch (38) eine Fläche (42) zur Montage der Radfelge (40) oder der Bremsscheibe (41) bildet, die axial in eine Demontagerichtung (200) der Radfelge (40) oder der Bremsscheibe (41) gewendet ist, wobei die Demontagerichtung (200) parallel zur Drehachse (100) verläuft, wobei der erste innere Lagerring (30, 34) von der Radnabe (30) geschaffen wird oder auf die Radnabe (30) aufgeschrumpft ist, wobei der zweite innere Lagerring (36) auf einen Schrumpfsitz (52) der Radnabe (30) aufgeschrumpft ist.

15. Rotationsanordnung (10) nach Anspruch 14,

**dadurch gekennzeichnet, dass** die drehende Unteranordnung außerdem eine Getriebeschale (32) umfasst, wobei der innere Lagerring (36) an einer ringförmigen Kontaktschnittstelle (58, 60), die sich zumindest in einer radialen Richtung bezüglich der Drehachse (100) erstreckt, an der Getriebeschale (32) anliegt.

16. Rotationsanordnung (10) nach Anspruch 15, **dadurch gekennzeichnet, dass** die ringförmige Kontaktschnittstelle (58, 60) zumindest teilweise, vorzugsweise vollständig, zwischen der ersten Wälzebene (PP1) und der zweiten (PP2) Wälzebene positioniert ist.

17. Rotationsanordnung (10) nach einem der Ansprüche 14 bis 16, **dadurch gekennzeichnet, dass** die Radnabe (30) ein massives, einteiliges Metallteil ist.

**Claims**

1. A rotary assembly (10), comprising:

    - an outer sub-assembly (12) comprising a first annular outer raceway (22) and a second annular outer raceway (24) which are centered on a common axis of revolution (100);
    - an inner sub-assembly (14) comprising a first inner bearing ring (30, 34) on which a first inner raceway (56) is formed, the first inner raceway (56) having a raceway bottom diameter DI1, and a second inner bearing ring (36) on which a second inner raceway (62) is formed, the second inner raceway (62) having a raceway bottom diameter DI2 larger than the raceway bottom diameter DI1 of the first inner raceway (56), the second inner bearing ring (36) and the first inner bearing (30, 34) being fixed relative to each other; and
    - balls (16, 18) forming a first row of balls (16) capable of rolling on the first outer raceway (22) and the first inner raceway (56) and a second row of balls (18) capable of rolling on the second outer raceway (24) and the second inner raceway (62) for guiding the outer sub-assembly (12) and the inner sub-assembly (14) relative to each other in rotation about the axis of revolution (100), the balls (16) of the first row of balls having a diameter DC1, a first pitch plane (PP1) containing the centers of the balls (16) of the first row of balls being located at a non-zero distance L from a second pitch plane (PP2) containing the centers of the balls (18) of the second row of balls;

    **characterized in that:**

    - the second inner bearing ring (36) has an outer diameter (Φ), measured in a sectional plane (PC) perpendicular to the axis of revolution (100) and located between the first pitch plane (PP1) and the second pitch plane (PP2), at a measurement distance DM from the first pitch plane (PP1), which is greater than a given threshold value VS, where:

$$\begin{cases} DM = 1{,}25 \times \dfrac{DC1}{2} \\ VS = \sup\left(1{,}1 \times DI1;\, DI1 + \dfrac{DC1}{2}\right) \end{cases}$$

2. The rotary assembly (10) according to claim 1, **characterized in that** the second inner bearing ring (36) comprises an axial end face (57) axially facing the first pitch plane (PP1), axially bearing against a bearing surface (59) of the first inner bearing ring (30, 34), the axial end face (57) being positioned in a transverse plane (PB) located between the first pitch plane (PP1) and the second pitch plane (PP2), at a distance D from the first pitch plane (PP1) which is preferably less than half the diameter DC1 of the balls (16) of the first row of balls.

3. The rotary assembly (10) according to any one of the preceding claims, **characterized in that** it further comprises a first unitary bearing cage (70), the first unitary bearing cage (70) comprising a ring (72) defining a reference axis (300) of the first bearing cage (70) and retaining claws (74) distributed along the periphery of the ring (72) to delimit recesses (76) for housing the balls (16) of the first row of balls (16).

4. The rotary assembly (10) according to claim 3, **characterized in that** the ring (72) is positioned on a side of the first pitch plane (PP1) opposite the second pitch plane (PP2), the retaining claws (74) projecting from the ring (72) toward the second pitch plane (PP2) through the first pitch plane (PP1), the retaining claws (74) having a free distal end (78), the recesses (76) each being delimited by two adjacent retaining claws (74) among the retaining claws (74) of the first unitary cage (70) and by a portion of the ring (721) connecting the two adjacent retaining claws (74).

5. The rotary assembly (10) according to claim 4, **characterized in that** for each of the recesses (76), the two adjacent retaining claws (74) each comprise a concave retaining guide facet (80) facing the ball (16) housed in the recess (76), the retaining guide facets (80) preferably being at least partially within a first pitch cylinder (CP1) having as its base a first pitch circle passing through the centers of the balls of the first row of balls (16) and centered on the axis of revolution (100), the retaining guide facets (80) preferably being at least partially between the first pitch plane (PP1) and the second pitch plane (PP2).

6. The rotary assembly (10) according to claim 5, **characterized in that** for each of the recesses (76), the ring portion (721) connecting the two adjacent retaining claws (74) comprises an end guide facet (82) facing the ball (16) housed in the recess (76), the end guide facet (82) preferably being located at least partially radially outside the first pitch cylinder (CP1).

7. The rotary assembly (10) according to any one of claims 4 to 6, **characterized in that** the first bearing cage (70) further comprises additional claws (84) distributed along the periphery of the ring (72), each of the additional claws (84) being associated with one of the retaining claws (74) and having a free distal end (86) located radially on the outside and facing the associated retaining claw (74).

8. The rotary assembly (10) according to claim 7, **characterized in that** for each of the recesses (76), the two additional claws (84) associated with the two adjacent retaining claws (74) each comprise an additional concave guide facet (88) facing the ball (16) housed in the recess (76), the additional guide facets (88) being at least partially outside the first pitch cylinder (CP1) and at least partially between the first pitch plane (PP1) and the second pitch plane (PP2).

9. The rotary assembly (10) according to claim 5, **characterized in that** for each of the recesses (76), the two adjacent retaining claws (74) each comprise an additional concave guide facet (88) facing the ball (16) housed in the recess (76), the additional guide facets (88) being at least partially outside the first pitch cylinder (CP1) and at least partially between the first pitch plane (PP1) and the second pitch plane (PP2).

10. The rotary assembly (10) according to any one of claims 3 to 8, **characterized in that** the ring (72) of the first bearing cage (70) further comprises a flat annular stacking surface (722) facing axially away from the retaining claws (74), and a centering surface (724) that is rotationally symmetrical about the reference axis (300) of the first bearing cage (70), the first bearing cage (70) further comprising flat facets (86) facing axially away from the annular stacking surface (722), superimposed with the flat annular stacking surface when seen in orthogonal projection on a stacking plane containing the flat annular stacking surface (722), and centering facets (742), facing radially away from the centering surface (724), in such a way that, when seen in orthogonal projection on the stacking plane, the centering facets (742) face the centering surface (724).

11. The rotary assembly (10) according to any one of the preceding claims, **characterized in that** it further comprises a second unitary bearing cage (90), comprising a ring (92) defining a reference axis of the second bearing cage (90) and retaining claws (94) distributed along the periphery of the ring (92) of the second bearing cage (90) to delimit recesses for housing the balls (18) of the second row of balls (18), the ring (92) of the second bearing cage (90) preferably being positioned on a side of the second pitch plane (PP2) opposite the first pitch plane (PP1), the retaining claws (94) of the second bearing cage (90) protruding from the ring (92) of the second bearing cage (90) toward the first pitch plane (PP1) through the second pitch plane (PP2), the retaining claws (94) of the second bearing cage (90) having a free distal end (98), the recesses being each delimited by two adjacent retaining claws among the retaining claws (94) of the second bearing cage (90) and by a portion of the ring (92) connecting the two adjacent retaining claws (94).

12. The rotary assembly (10) according to any one of the preceding claims, **characterized in that** the balls forming the first row of balls (16) have a ball diameter DC1 of less than or equal to a ball diameter DC2 of the balls forming the second row of balls (18).

13. The rotary assembly (10) according to any one of the preceding claims, **characterized in that** the second inner bearing ring (36) is shrink-fitted onto a shrink-fit surface (52) of the first inner bearing ring (30, 34).

14. The rotary assembly (10) according to any one of the preceding claims, **characterized in that** the outer sub-assembly (12) constitutes a fixed sub-assembly (12) of a motor vehicle drive wheel guide (10), and the inner sub-assembly (14) constitutes a rotating sub-assembly (14) of the motor vehicle drive wheel guide (10), which is able to rotate relative to the fixed sub-assembly (12) about the axis of revolution (100), the rotating sub-assembly comprising a wheel hub (30) comprising a flange (38) provided with an attachment interface for a wheel rim (40) or a brake disk (41), the attachment flange (38) forming a mounting surface (42) for the wheel rim (40) or the brake disk (41) which is turned axially in a direction of removal (200) of the wheel rim (40) or the brake disk (41), the removal direction (200) being parallel to the axis of revolution (100), the first inner bearing ring (30, 34) being constituted by the wheel hub (30) or shrink-fitted onto the wheel hub (30), the second inner bearing ring (36) being shrink-fitted onto a shrink-fit surface (52) of the wheel hub (30).

15. The rotary assembly (10) according to claim 14, **characterized in that** the rotating sub-assembly further comprises a transmission bowl (32), the inner bearing ring (36) bearing against the transmission bowl (32) at an annular contact interface (58, 60) extending at least in a radial direction relative to the axis of revolution (100).

16. The rotary assembly (10) according to claim 15, **characterized in that** the annular contact interface (58, 60) is positioned at least partially, and preferably completely, between the first pitch plane (PP1) and the second pitch plane (PP2).

17. The rotary assembly (10) according to any one of claims 14 to 16, **characterized in that** the wheel hub (30) is a unitary solid metal part.

Fig. 1

Fig. 2

Fig. 3

Fig. 4

Fig. 5

Fig. 6

Fig. 7

Fig. 8

Fig. 9

Fig. 10

**EP 4 093 985 B1**

## RÉFÉRENCES CITÉES DANS LA DESCRIPTION

**Documents brevets cités dans la description**

- FR 3052104